# EUROPÄISCHE PATENTSCHRIFT

(11) **EP 3 354 127 B1**
(45) Veröffentlichungstag und Bekanntmachung des Hinweises auf die Patenterteilung: **04.03.2020**
(21) Anmeldenummer: 18151789.7
(22) Anmeldetag: 16.01.2018
(51) Int. Cl.: A01G 3/033, A01G 3/08

(54) **HOCH-ENTASTER**
HIGH DELIMBER
ÉBRANCHEUR DESTINÉ À ÉBRANCHER EN HAUTEUR

(30) Priorität: 26.01.2017 AT 500552017
(43) Veröffentlichungstag der Anmeldung: 01.08.2018
(73) Patentinhaber: Riegl Laser Measurement Systems GmbH, 3580 Horn (AT)
(72) Erfinder: RIEGL, Johannes, 3754 Trabenreith (AT)
(74) Vertreter: Weiser & Voith Patentanwälte Partnerschaft

(56) Entgegenhaltungen:
- WO-A1-2010/140939
- CN-U- 205 623 357
- US-A1- 2016 205 872

## Beschreibung

Die vorliegende Erfindung betrifft einen Hoch-Entaster, umfassend eine motorgetriebene Astsäge an einem Stiel, dessen unteres Ende einen Handgriff für den Benutzer bildet.

Hoch-Entaster sind zum Entfernen überhängender Äste, Beschneiden von Bäumen, Kappen von Wipfeln, Aufasten junger Laubbäume usw. nützlich. Sie erübrigen ein gefährliches und spezielles Training erforderndes Besteigen des Baumes mit der Motorsäge, solange der abzuschneidende Ast noch mit dem Stiel erreicht werden kann. Auch Verletzungen der Baumrinde beim Besteigen, welche diese anfällig für Käferbefall macht, werden vermieden. Das Manövrieren der schweren Motorsäge am Ende eines langen Stiels von z.B. 5 - 20 m Länge erfordert jedoch aufgrund der Hebelwirkung einige Übung und Achtsamkeit. Um über den langen Stiel ausreichende Anpresskraft auf den abzusägenden Ast ausüben zu können, ist der Benutzer überdies häufig zu einer unnatürlichen Arbeitshaltung gezwungen, die schädlich für den Körper ist. In manchen Situationen, insbesondere bei sehr dichten Bäumen, kann vom Boden überhaupt keine ausreichende Anpresskraft ausgeübt werden, so dass die Sägeleistung nicht ausreicht.

Die CN 205 623 357 U und US 2016/205872 A1 zeigen freischwebende Drohnen mit daran montierten Astsägen.

Die Erfindung setzt sich zum Ziel, einen Hoch-Entaster zu schaffen, welcher einfacher handhabbar ist, eine angenehme und sichere Arbeitshaltung ermöglicht und auch in schwierigen Astsituationen ausreichende Sägeleistung liefert.

Dieses Ziel wird mit einem Hoch-Entaster gemäß Anspruch 1 erreicht, der sich erfindungsgemäß durch zumindest einen motorgetriebenen Propeller auszeichnet, welcher an der Astsäge oder dem Stiel gelagert ist.

Die Erfindung schafft damit eine völlig neue Art von Arbeitsgerät, nämlich einen kombiniert handbetätigten und propellerunterstützen Hoch-Entaster, so dass er in der Art eines herkömmlichen Hoch-Entasters mittels des Stiels auf intuitive Weise händisch manövriert werden kann und gleichzeitig am Stiel zusätzliche Kraft durch den Propellerschub erhält. Je nach Einstellung der Propellerachse relativ zur Astsäge bzw. dem Stiel kann der Propeller dabei sowohl nach oben gerichtete Haltekraft für das Halten des Gewichts der Astsäge beisteuern, sodass diese gleichsam "gewichtslos" manövrierbar wird, als auch zusätzliche Anpresskraft auf die Astsäge ausüben. Die Bedienung des Hoch-Entasters wird dadurch einfacher, gestattet eine ergonomischere Arbeitshaltung und insgesamt werden bessere Sägeergebnisse erzielt.

Bevorzugt ist der zumindest eine Propeller verschwenkbar an der Astsäge oder dem Stiel gelagert. Die Propellerachse kann damit auch noch vor Ort relativ zur Astsäge bzw. dem Stiel verstellt bzw. justiert werden, beispielsweise auch mittels einer Fernbedienung vom unteren Ende des Stiel aus.

Eine erste, besonders einfache Ausführungsform der Erfindung zeichnet sich dadurch aus, dass die Propellerachse des zumindest einen Propellers mit der Längsachse des Stiels im wesentlichen zusammenfällt. Der bzw. die Propeller liegt/liegen damit direkt über und/oder unter dem Anbringungsort der Astsäge am Stiel. Einerseits kann so der Propeller das Gewicht der Astsäge und des Stiels tragen und andererseits wird dadurch eine besonders intuitive Handhabung des Stiels möglich. Bevorzugt werden dabei zwei gegenläufig motorgetriebene Propeller vorgesehen, deren Propellerachsen zusammenfallen, so dass im Betrieb der Propeller kein Drehmoment auf den Stiel ausgeübt wird.

Eine zweite, besonders vorteilhafte Ausführungsform der Erfindung besteht darin, dass der zumindest eine motorgetriebene Propeller über einen Ausleger an der Astsäge oder dem Stiel gelagert ist. Der Ausleger ermöglicht einen seitlichen Abstand zwischen Propeller und Astsäge, so dass die Astsäge z.B. innerhalb einer dichten Baumkrone manövriert werden kann, während der Propeller unbeeinträchtig von Ästen und Blattwerk außerhalb der Baumkrone verbleibt.

Bevorzugt werden nicht nur ein einziger sondern gleich mehrere motorgetriebene Propeller verwendet, z.B. zwei, drei, vier, sechs, acht oder mehr, die in Form eines Multicopters, d.h. als Bicopter, Tricopter, Quadrocopter, Hexacopter, Octocopter usw., zusammengeschaltet sind. Ein derartiger Multicopter ist mit einer Steuerung zur Einstellung und Stabilisierung seiner Fluglage ausgestattet, welche meist auf der drehmomentausgleichenden Wirkung paarweise gegenläufiger Propeller und den Fluglagesteuerungsmöglichkeiten unterschiedlicher Propellerdrehzahlen der verschiedenen Propeller beruht.

Wenn die Steuerung die Fluglage des Multicopters stabilisiert, kann dieser direkt oder über den Ausleger das Gewicht der Astsäge mittragen. Dadurch wird das Manövrieren der Astsäge und Anvisieren des abzusägenden Asts wesentlich erleichtert. Zusätzlich können durch eine Relativverstellung der Drehzahlen der verschiedenen Propeller der Multicopter gekippt und damit die Propellerachsen der Propeller gegenüber der Vertikalen verstellt werden, wodurch der Multicopter eine Schubkomponente in Horizontalrichtung entwickelt, die sowohl zur Manövrierung der Astsäge als auch zum Aufbringen von Anpresskraft für die Astsäge ausgenützt werden kann.

Für den Sägevorgang ist es besonders vorteilhaft, wenn gemäß einem weiteren Merkmal der Erfindung die Astsäge einen Messwertgeber für ihre Sägeleistung oder Anpresskraft aufweist und der (zumindest eine) motorgetriebene Propeller vom Messwert des Messwertgebers gesteuert ist. Dadurch kann die Propellerleistung in Abhängigkeit von der erforderlichen Anpresskraft gesteuert werden, um diese zu unterstützen.

Besonders vorteilhaft ist es dabei, wenn der Messwertgeber der Astsäge an die Steuerung des Multikopters angeschlossen und diese dafür ausgebildet ist, die Fluglage des Multikopters in Hinblick auf eine Konstanthaltung der Sägeleistung oder -kraft einzustellen. Dadurch wird eine autarke Regelung geschaffen, welche den Benutzer von einem gesonderten Steuern des Multicopters entlastet: Der Multicopter stellt sich autark so ein, dass die Astsäge beim Sägen gegen den abzusägenden Ast mit genau jener Anpresskraft gepresst wird, dass sie in ihrem optimalen Leistungsbereich arbeitet.

In allen Ausführungsformen mit Ausleger ist es günstig, wenn der Ausleger über ein erstes Gelenk schwenkbar an der Astsäge oder dem Stiel gelagert ist, wobei das erste Gelenk bevorzugt zusätzlich ein Verdrehen des Auslegers um dessen Längsachse gestattet. Zum einen kann der Ausleger mit daran gelagertem Propeller zu Transport- und Lagerungszwecken an den Stiel angeklappt werden. Zum anderen kann sich der zumindest eine Propeller mit dem Ausleger gegenüber dem Stiel bzw. der Astsäge in einem oder bevorzugt zwei Freiheitsgraden bewegen, um seine Halte- und Anpressfunktionen auszuführen.

Aus denselben Gründen ist bevorzugt der zumindest eine Propeller über ein zweites Gelenk mit gegenüber dem Ausleger verschwenkbarer Propellerachse am Ausleger gelagert, welches zweite Gelenk bevorzugt zusätzlich ein Verschwenken der Propellerachse um die Längsachse des Auslegers gestattet. Auch am propellerseitigen Ende des Auslegers wird somit ein Gelenk mit einem bzw. bevorzugt zwei Freiheitsgraden verwendet. Im besonders bevorzugten Fall sowohl eines ersten als auch eines zweiten Gelenks am einen bzw. anderen Ende des Auslegers wird der Propeller damit hochbeweglich gegenüber der Astsäge und kann so seine Halte- und/oder Anpresskräfte über den als Zug- oder Druckstange wirkenden Ausleger auf die Astsäge ausüben.

Der genannte zweite Freiheitsgrad des ersten bzw. zweiten Gelenks rund um die Längsachse des Auslegers kann auch errichtet werden, indem alternativ oder zusätzlich der Ausleger selbst ein Drehgelenk enthält, welches ein Verdrehen seines einen Endes gegenüber seinem anderen Ende gestattet.

In jeder Variante kann der Antriebsmotor bevorzugt am unteren Ende des Stiels montiert sein und die Astsäge über eine im Stiel verlaufende Welle antreiben. Dadurch liegt der Schwerpunkt des Hoch-Entasters tief, um seine Handhabung zu erleichtern.

Der zumindest eine Propeller kann über einen eigenen, von der Astsäge gesonderten Antrieb verfügen. Bevorzugt wird jedoch der Propeller über eine - gegebenenfalls im Ausleger verlaufende - zweite Welle von der motorgetriebenen Astsäge angetrieben, sodass lediglich ein gemeinsamer Motor erforderlich ist, beispielsweise ein Verbrennungsmotor, der in der Astsäge oder - über die genannte Welle wirkend - am unteren Ende des Stiels montiert ist.

Alternativ kann der zumindest eine Propeller von einem - bzw. im Falle eines Multicopters von mehreren - Elektromotor(en) angetrieben sein, welche(r) über eine - gegebenenfalls im Ausleger verlaufende - Stromleitung von einer Energieversorgung gespeist ist/sind. Die Energieversorgung kann beispielsweise eine Batterie sein, die zwecks tiefer Schwerpunktlage am unteren Ende des Stiels montiert ist, oder ein vom Antriebsmotor der Astsäge angetriebener Generator. Dadurch braucht z.B. ein mit mehreren Elektromotoren ausgestatteter Multicopter keine eigene Energieversorgung, so dass er auch keinen Einschränkungen hinsichtlich seiner Flugzeit unterliegt, wenn er auf ausreichende Energiereserven am Stiel des Hoch-Entasters zugreifen kann.

Gemäß einem weiteren bevorzugten Merkmal der Erfindung kann in jeder der genannten Ausführungsformen die Astsäge verschwenkbar und/oder höhenverstellbar am Stiel gelagert sein. Bevorzugt ist diese Schwenk- bzw. Höhenverstellung der Astsäge vom unteren Ende des Stiels aus fernbedienbar. So kann beispielsweise der zumindest eine Propeller - direkt oder über den Ausleger - am oberen Ende des Stiels angreifen und die Astsäge darunter entlang des Stiels höhenverstellbar und in beliebiger Richtung schwenkbar sein, so dass beispielsweise der Propeller oberhalb einer Baumkrone zu liegen kommen und darunter der Baum mit der Astsäge beschnitten werden kann.

Besonders günstig ist es, wenn der Stiel zumindest eine auf die Astsäge ausgerichtete Kamera trägt und ein von der Kamera gespeister Monitor vorgesehen ist. Der Monitor kann dabei ein am unteren Ende des Stiels montierter Bildschirm oder eine vom Benutzer aufsetzbare Datenbrille sein. Auf diese Weise kann der Benutzer den Sägevorgang bequem aus der Ferne im Detail überwachen, ohne nach oben blicken zu müssen.

Zur Erhöhung der Betriebssicherheit ist der Hoch-Entaster bevorzugt mit einer Notabschaltung ausgestattet. In einer ersten Variante wird dazu eine am unteren Ende des Stiels vom Benutzer betätigbare Totmannschaltung vorgesehen, mittels welcher der bzw. die Antrieb(e) des zumindest einen Propellers und der Astsäge notabschaltbar ist/sind. In einer zweiten Variante ist dazu ein am Stiel angebrachter Neigungssensor vorgesehen, mittels welchem der bzw. die Antrieb(e) des zumindest einen Propellers und der Astsäge notabschaltbar ist/sind, wobei der Neigungssensor dafür ausgebildet ist, die Notabschaltung zu veranlassen, wenn die Neigung des Stiels gegenüber der Vertikalen einen vorgegebenen Schwellwert überschreitet. In der ersten Variante muss der Benutzer die Totmannschaltung z.B. ständig bzw. repetitiv betätigen, um den Propeller- und Sägebetrieb aufrechtzuerhalten, in der zweiten Variante wird bei einem Kippen bzw. Niederlegen des Stiels die Notabschaltung automatisch veranlasst. Beide Varianten können auch kombiniert eingesetzt werden.

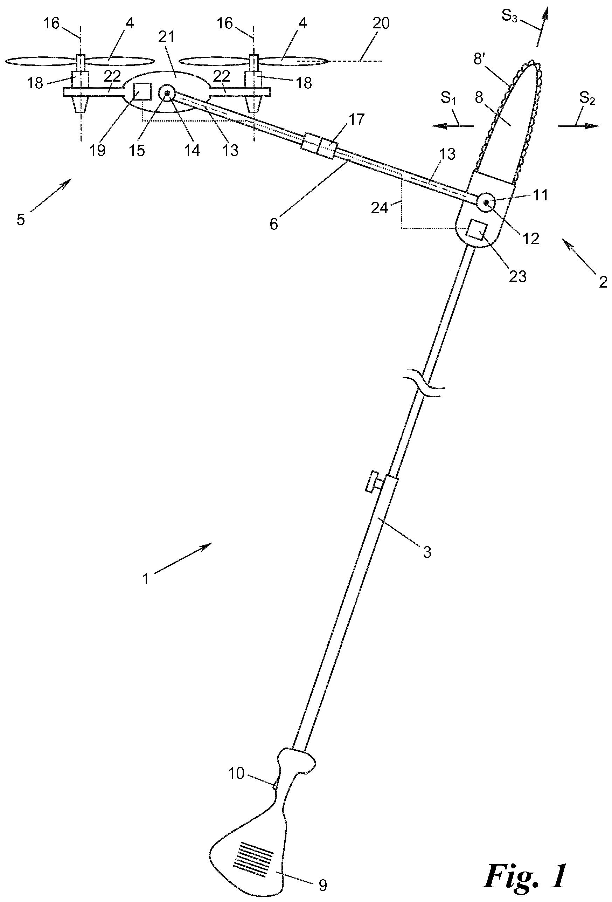

Die Erfindung wird nachstehend anhand von in den beigeschlossenen Zeichnungen dargestellten Ausführungsbeispielen näher erläutert. In den Zeichnungen zeigen die Fig. 1 bis 3 verschiedene Ausführungsformen des Hoch-Entasters der Erfindung jeweils in einer Seitenansicht. Gleiche Bezugszeichen bezeichnen dabei gleiche Teile in allen Figuren.

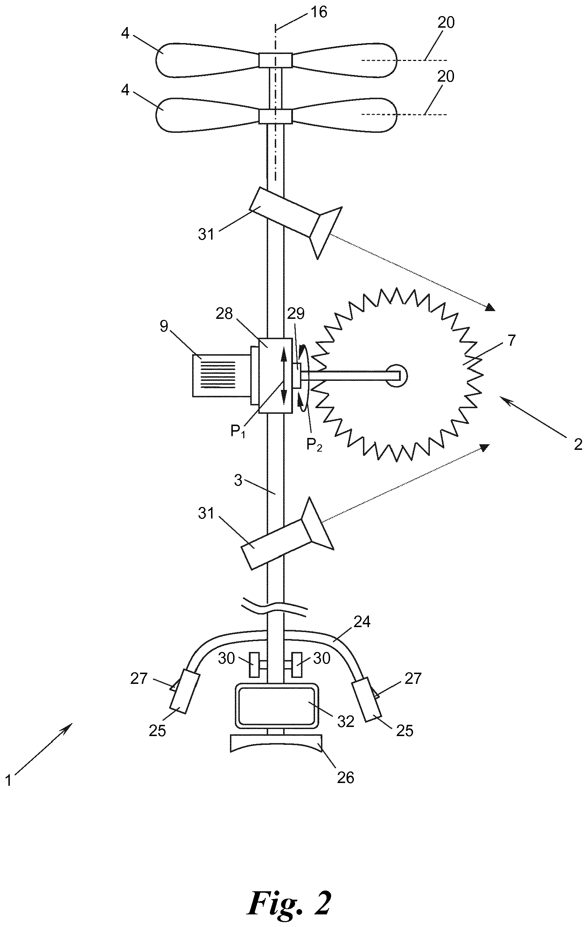

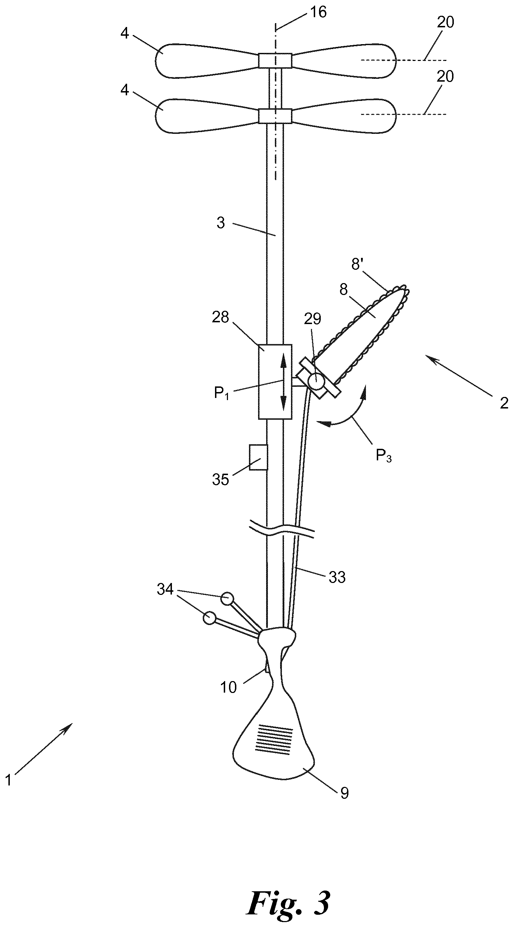

In den Fig. 1 bis 3 ist jeweils ein Hoch-Entaster 1 gezeigt, welcher im wesentlichen drei Hauptkomponenten umfasst: Eine motorgetriebene Astsäge ("Motorsäge") 2; einen Stiel 3, an dem die Astsäge 2 montiert ist; und einen oder mehrere Propeller 4, hier zu einem Multicopter 5 zusammengeschaltet, welche(r) Propeller 4 an der Astsäge 2 oder dem Stiel 3 direkt (Fig. 2, 3) oder über einen Ausleger 6 (Fig. 1) gelagert ist/sind.

Die Astsäge 2 kann von jeder in der Technik bekannten Art sein, beispielsweise eine Kreißsäge mit einer rotierenden Sägescheibe 7 (Fig. 2) oder eine Kettensäge mit einer um ein stehendes Sägeblatt 8 umlaufenden Sägekette 8' (Fig. 1, 3). Der Antriebsmotor der Astsäge 2 kann beispielsweise ein Verbrennungsmotor 9 sein, der aus Schwerpunktsgründen am unteren Ende des Stiels 3 montiert ist und die Sägescheibe 7 oder die Sägekette 8' über eine im Stiel 3 verlaufende Welle (nicht gezeigt) antreibt. Alternativ könnte der Antriebsmotor 9 ein Elektromotor sein, sei es netzstrom- oder batteriegespeist. Im Falle einer Batteriespeisung könnten auch nur die Batterie des Antriebsmotors 9 am unteren Ende des Stiels 3 und der Elektromotor des Antriebsmotor 9 an der Astsäge 2 montiert und über eine im Stiel 3 verlaufende Stromleitung (nicht gezeigt) von der Batterie am unteren Stielende versorgt sein.

Der Stiel 3 kann einstückig oder mehrteilig sein, z.B. zusammensteckbar, zusammenlegbar oder bevorzugt teleskopierend. Der Stiel 3 kann eine Länge von mehreren Metern erreichen, beispielsweise 5 bis 20 m oder mehr. Das untere Ende des Stiels 3 bildet einen Handgriff für den Benutzer. Wenn der Antriebsmotor 9 - oder auch nur dessen Speisebatterie im Falle eines Elektromotors - am unteren Ende des Stiels 3 montiert ist, können auch der gesamte Antriebsmotor 9 bzw. dessen Batterie in Form eines Handgriffs ausgestattet sein. Steuerungselemente für die Astsäge 2, beispielsweise ein Ein-Ausschalter und/oder Leistungs- oder Drehzahlregler 10, sind ebenfalls dort angeordnet.

Der optionale Ausleger 6 ist ein Stab, Gestänge, Fachwerk od.dgl. und greift mit seinem einen Ende starr oder bevorzugt über ein erstes Gelenk 11 beweglich am oberen Ende des Stiels 3 und/oder der Astsäge 2 an. Das Gelenk 11 hat einen ersten Freiheitsgrad um eine - hier normal zur Zeichnungsebene verlaufende - Drehachse 12, welche ein Verschwenken des Auslegers 6 gegenüber dem Stiel 3 bevorzugt in der Ebene des Sägeblattes 8 gestattet. Optional hat das Gelenk 11 einen zweiten Freiheitsgrad um die Längsachse 13 des Auslegers 6, um dem Propeller 4 bzw. Multicopter 5 die Beibehaltung einer stabilen Fluglage zu ermöglichen, wenn der Stiel 3 in die Zeichnungsebene hinein- und aus dieser herausgeschwenkt wird.

Aus denselben Gründen ist der Propeller 4 bzw. Multicopter 5 am freien Ende des Auslegers 6 über ein zweites Gelenk 14 beweglich am Ausleger 6 gelagert. Das Gelenk 14 hat einen ersten Freiheitsgrad um eine - hier normal zur Zeichnungsebene verlaufende - Drehachse 15, welche ein Verschwenken der Propellerachse(n) 16 des Propellers 4 bzw. Multicopters 5 gegenüber dem Ausleger 6 gestattet. Optional hat das Gelenk 14 einen zweiten Freiheitsgrad, welcher zusätzlich ein Verschwenken der Propellerachse(n) 16 rund um die Längsachse 13 des Auslegers 6 ermöglicht.

Anstelle der zweiten Freiheitsgrade der Gelenke 11, 14 kann der Ausleger 6 optional ein Drehgelenk 17 enthalten, welches ein Verdrehen seines sägeseitigen Endes gegenüber seinem propellerseitigen Ende um seine Längsachse 13 gestattet.

Mit Hilfe der Gelenke 11, 14, 17 ist der bzw. sind die Propeller 4 gegenüber der Astsäge 2 bzw. dem oberen Ende des Stiels 3 derart beweglich, dass über den Ausleger 6 oder den Stiel 3 als Zug- oder Druckstange sowohl eine nach oben gerichtete Haltekraft als auch eine in allen möglichen Sägerichtungen S₁, S₂, S₃ wirkende Anpresskraft auf die Astsäge 2 ausgeübt werden kann.

Der Multicopter 5 ist beispielsweise ein herkömmlicher Quadro- oder Octocopter mit vier oder acht Propellern 4, die jeweils von einem individuellen Elektromotor 18 angetrieben und von einer Steuerung 19 so gesteuert sind, dass die Fluglage des Multicopters 5 eingestellt und stabilisiert werden kann. In einer solcherart stabil eingestellten Fluglage nehmen die Propellerachsen 16 eine bestimmte Winkelstellung zum Ausleger 6 und damit zur Astsäge 2 ein, sodass der Schub der Propeller 4 die gewünschte Halte- und/oder Anpresskraft auf die Astsäge 2 ausübt.

Es versteht sich, dass der Multicopter 5 auch weniger als vier, z.B. zwei oder drei, Propeller 4 oder auch jede andere Anzahl von Propellern 4 aufweisen kann, z.B. fünf, sechs, sieben, acht oder mehr. Die Propeller 4 können beispielsweise in einer oder mehreren Ebenen 20 rund um eine Zentraleinheit 21 an Armen 22 verteilt angeordnet sein, wobei die Zentraleinheit 21 die Steuerung 19 enthalten und das Gelenk 14 lagern kann. In einer vereinfachten, nicht dargestellten Ausführungsform könnte jedoch auch lediglich nur ein einziger Propeller 4 vorgesehen sein, der am Ende des Auslegers 6 oder des Stiels 3 gelagert ist.

Die Astsäge 2 enthält optional einen Messwertgeber 23 für ihre Sägeleistung oder Anpresskraft. Der Messwertgeber 23 kann beispielsweise ein mechanischer Kraftsensor sein, z.B. Dehnungsmessstreifen, welcher eine zwischen Sägescheibe 7 bzw. Sägeblatt 8 und Stiel 3 wirkende Hebelkraft misst. Alternativ kann der Messwertgeber 23 auf elektronischem Wege die Sägeleistung der Astsäge 2 messen, beispielsweise durch Messung der Stromaufnahme der Astsäge 2, wenn diese über eine Leistungsregelung verfügt, die ihre Drehzahl konstantzuhalten trachtet. Die Energieaufnahme der Astsäge 2 ist dann ein Maß für ihre aktuelle Sägeleistung, was wiederum ein indirektes Maß für ihre Anpresskraft ist.

Der Ausgang des Messwertgebers 23 kann über eine drahtgebundene oder drahtlose Datenverbindung 24 die Steuerung 19 der Propeller 4 des Multicopters 5 so steuern, dass die Fluglage des Multicopters 5 im Hinblick auf eine größtmögliche Konstanthaltung der Sägeleistung oder -kraft der Astsäge 2 eingestellt wird. Dadurch unterstützt der Multicopter 5 automatisch die Handhabungskraft, die der Benutzer am unteren Ende des Stiel 3 aufbringt: Wenn der Benutzer wenig Hebelkraft auf den Stiel 3 aufbringt, sodass die Astsäge 2 nur mit geringer Anpresskraft an den abzusägenden Ast angedrückt würde, ergäbe sich eine geringe Leistungsaufnahme bzw. geringe Anpresskraft, die der Messwertgeber 23 misst und der Steuerung 19 mitteilt. Diese steuert daraufhin die Fluglage und somit Lage der Achsen 16 der Propeller 4 des Multicopters 5 so, dass die Sägeleistung und damit Anpresskraft bis auf den optimalen Betriebsbereich des Astsäge 2 erhöht wird. Die Steuerung 19 unterstützt dadurch adaptiv die Handhabungskraft des Benutzers, sodass die verfügbare Sägeleistung der Astsäge 2 immer optimal ausgenützt wird. Der Benutzer am unteren Ende des Stiels 3 braucht dadurch nur mehr geringe Manövrierbewegungen ausführen, während der Multicopter 5 die am oberen Ende des Stiels 3 erforderlichen Kräfte für den Sägebetrieb erzeugt.

Der bzw. die Antriebsmotor(en) 18 des bzw. der Propeller 4 könnten z.B. autarke Verbrennungsmotoren sein. Alternativ könnten der bzw. die Propeller 4 über eine im Ausleger 6 verlaufende (nicht dargestellte) Welle vom Antriebsmotor 9 der Astsäge 2 angetrieben werden. Wenn jedoch der bzw. die Antriebsmotor(en) 18 des bzw. der Propeller 4 Elektromotoren sind, werden diese bevorzugt über eine im Ausleger 6 verlaufende Stromleitung (nicht gezeigt) von einer Energieversorgung der Astsäge 2 gespeist. Die Energieversorgung der Astsäge 2 kann dabei entweder ein vom Antriebsmotor 9 der Astsäge 2 angetriebener Generator sein oder alternativ eine Batterie, die z.B. am unteren Ende des Stiels 3 montiert ist, beispielsweise dieselbe Batterie, die auch den Elektromotor einer elektromotorisch angetriebenen Astsäge 2 speist.

Fig. 2 zeigt eine alternative Ausführungsform des Hoch-Entasters 1, wobei hier nur auf die Unterschiede gegenüber Fig. 1 eingegangen wird. In der Ausführungsform von Fig. 2 sind zwei gegenläufige Propeller 4 direkt am oberen Ende des Stiels 3 gelagert, und zwar so, dass ihre Propellerachsen 16 miteinander und mit der Längsachse des Stiels 3 zusammenfallen.

Das untere Ende des Stiels 3 ist in Form eines zweiarmigen Lenkers 24 mit Handgriffen 25 zum beidhändigen Ergreifen sowie einer Bruststütze 26 ausgebildet. An den Handgriffen 25 sind jeweils Ein-/Ausschalter 27 angeordnet, welche zu einer Totmannschaltung zusammengeschaltet sind, d.h. der Benutzer muss beide Ein-/Ausschalter 27 ständig betätigen, damit die Astsäge 2 und die Propeller 4 in Betrieb sind. Auch alternative Ausführungen einer solchen Totmannschaltung 27 sind denkbar, beispielsweise ein Taster, der in regelmäßigen Abständen vom Benutzer zu betätigen ist, um den Betrieb der Astsäge 2 und der Propeller 4 aufrechtzuerhalten, oder ein Näherungssensor, welcher das Vorhandensein des Benutzers in der Nähe des unteren Endes des Stiels 3 detektiert, usw. Wird die Totmannschaltung 27 nicht betätigt, wird eine Notabschaltung der Astsäge 2 und/oder des bzw. der Propeller 4 veranlasst.

Die Astsäge 2 ist in der Ausführungsform von Fig. 2 auf dem Stiel 3 höhenverstellbar gelagert, siehe die Gleithülse 28 auf dem Stiel 3 und Pfeil P₁. Alternativ oder zusätzlich ist die Astsäge 2 gegenüber dem Stiel 3 verschwenkbar an diesem gelagert, siehe Gelenk 29 und Pfeil P₂. Mithilfe des Gelenks 29 kann die Astsäge 2 beispielsweise zwischen einer Stellung mit horizontaler Sägescheibe 7 bzw. horizontalem Sägeblatt 8 und einer Stellung mit vertikaler Sägescheibe 7 bzw. vertikalem Sägeblatt 8 und jeder beliebigen Zwischenstellung verschwenkt werden. Die Höhenverstellung und Verschwenkung der Astsäge 2 kann beispielsweise über ein Gestänge, Seilzüge, Wellen od.dgl. (nicht gezeigt) von Hebeln 30 am unteren Ende des Stiels 3 aus fernbedient werden.

Im Bereich der Astsäge 2 sind am Stiel 3 eine oder mehrere Kameras 31 montiert, die auf den Sägebereich der Kreissäge 2 gerichtet sind. Am unteren Ende des Stiels 3 ist ein Monitor 32 angeordnet, welcher die Bilder der Kamera(s) 31 dem Benutzer anzeigt. Anstelle eines Monitors 32 könnte beispielsweise auch eine über eine drahtgebundene oder drahtlose Verbindung mit den Kameras 31 verbundene Datenbrille vorgesehen sein, welche der Benutzer aufsetzen kann, um den Sägevorgang zu beobachten.

Fig. 3 zeigt noch eine weitere Ausführungsform des Hoch-Entasters 1, wobei hier nur auf die Unterschiede gegenüber Fig. 2 eingegangen wird. Die Astsäge 2 ist hier wieder in Form einer Kettensäge, deren Sägeblatt 8 mittels des Gelenks 29 in einer etwa vertikalen Ebene auf- und abschwenkbar ist (Pfeil P₃), optional auch gegenüber der Zeichnungsebene verschwenkbar im Sinne des Pfeils P₂ von Fig. 2. Über Seilzüge 33 ist sowohl die Höhenverstellung (P₁) als auch die Schwenkverstellung (P₂, P₃) von Bedienungshebeln 34 am unteren Ende des Stiels 3 aus fernbedienbar.

In der Ausführungsform von Fig. 3 ist am Stiel 3 ein Neigungssensor 35 angebracht, welcher die Neigung des Stiels 3 gegenüber der Vertikalen misst und der auf den bzw. die Antriebsmotor(en) der Astsäge 2 und/oder des bzw. der Propeller 4 so einwirkt, so dass diese abgeschaltet werden, wenn die Neigung der Längsachse 16 des Stiels 3 gegenüber der Vertikalen einen vorgegebenen Schwellwert, z.B. 10°, 20° oder 30°, überschreitet. In den Ausführungsformen der Fig. 2 und 3 kann damit beispielsweise gewährleistet werden, dass der bzw. die Propeller 4 erst dann in Betrieb gehen, wenn der Stiel 3 annähernd aufrecht ist.

Im Gegensatz dazu kann bei der Ausführungsform von Fig. 1 der Multikopter 5 beispielsweise bereits bei liegendem Stiel 3 und liegendem Ausleger 6 gestartet werden und hebt dann selbsttätig den Stiel 3 unter gleichzeitigem Aufklappen des Auslegers 6 in die in Fig. 1 gezeigte Betriebsstellung an.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Hoch-Entaster, umfassend eine motorgetriebene Astsäge an einem Stiel, dessen unteres Ende einen Handgriff für den Benutzer bildet, und zumindest einen motorgetriebenen Propeller (4), welcher an der Astsäge (2) oder dem Stiel (3) gelagert ist.

2. Hoch-Entaster nach Anspruch 1, **dadurch gekennzeichnet, dass** der zumindest eine Propeller (4) verschwenkbar an der Astsäge (2) oder dem Stiel (3) gelagert ist.

3. Hoch-Entaster nach Anspruch 1 oder 2, **dadurch gekennzeichnet, dass** die Propellerachse (16) des zumindest einen Propellers (4) mit der Längsachse des Stiels (3) im wesentlichen zusammenfällt.

4. Hoch-Entaster nach Anspruch 3, **dadurch gekennzeichnet, dass** zwei gegenläufig motorgetriebene Propeller (4) vorgesehen sind, deren Propellerachsen (16) zusammenfallen.

5. Hoch-Entaster nach Anspruch 1 oder 2, **dadurch gekennzeichnet, dass** der zumindest eine motorgetriebene Propeller (4) über einen Ausleger (6) an der Astsäge (2) oder dem Stiel (3) gelagert ist.

6. Hoch-Entaster nach einem der Ansprüche 1 bis 5, **dadurch gekennzeichnet, dass** zumindest zwei, bevorzugt vier bis acht, motorgetriebene Propeller (3) in Form eines Multikopters (5) vorgesehen sind, welcher mit einer Steuerung (19) zur Einstellung und Stabilisierung seiner Fluglage ausgestattet ist.

7. Hoch-Entaster nach einem der Ansprüche 1 bis 6, **dadurch gekennzeichnet, dass** die Astsäge (2) einen Messwertgeber (23) für ihre Sägeleistung oder Anpresskraft aufweist und der zumindest eine motorgetriebene Propeller (4) vom Messwert des Messwertgebers (23) gesteuert ist.

8. Hoch-Entaster nach den Ansprüchen 6 und 7, **dadurch gekennzeichnet, dass** der Messwertgeber (23) der Astsäge (2) an die Steuerung (19) des Multikopters (5) angeschlossen und diese dafür ausgebildet ist, die Fluglage des Multikopters (5) in Hinblick auf eine Konstanthaltung der Sägeleistung oder -kraft der Astsäge (2) einzustellen.

9. Hoch-Entaster nach einem der Ansprüche 1 bis 8 jeweils in Verbindung mit Anspruch 5, **dadurch gekennzeichnet, dass** der Ausleger (6) über ein erstes Gelenk (11) schwenkbar an der Astsäge (2) oder dem Stiel (3) gelagert ist, wobei das erste Gelenk (11) bevorzugt zusätzlich ein Verdrehen des Auslegers (6) um dessen Längsachse (13) gestattet.

10. Hoch-Entaster nach Anspruch 9, **dadurch gekennzeichnet, dass** der zumindest eine Propeller (4) über ein zweites Gelenk (14) mit gegenüber dem Ausleger (6) verschwenkbarer Propellerachse (16) am Ausleger (6) gelagert ist, wobei das zweite Gelenk (14) bevorzugt zusätzlich ein Verschwenken der Propellerachse (16) um die Längsachse (13) des Auslegers (6) gestattet.

11. Hoch-Entaster nach Anspruch 9 oder 10, **dadurch gekennzeichnet, dass** der Ausleger (6) ein Drehgelenk (17) enthält, welches ein Verdrehen seines einen Endes gegenüber seinem anderen Ende gestattet.

12. Hoch-Entaster nach einem der Ansprüche 1 bis 11, **dadurch gekennzeichnet, dass** der Antriebsmotor (9) der Astsäge (2) am unteren Ende des Stiels (3) montiert ist und die Astsäge (2) über eine im Stiel (3) verlaufende erste Welle antreibt.

13. Hoch-Entaster nach einem der Ansprüche 1 bis 12, **dadurch gekennzeichnet, dass** der zumindest eine Propeller (4) über eine zweite Welle von der motorgetriebenen Astsäge (2) angetrieben ist.

14. Hoch-Entaster nach einem der Ansprüche 1 bis 12, **dadurch gekennzeichnet, dass** der zumindest eine Propeller (4) von zumindest einem Elektromotor (18) angetrieben ist, welcher über eine Stromleitung von einer Energieversorgung der Astsäge (2) gespeist ist.

15. Hoch-Entaster nach Anspruch 14, **dadurch gekennzeichnet, dass** die Energieversorgung eine Batterie, die am unteren Ende des Stiels (3) montiert ist, oder ein vom Antriebsmotor (9) der Astsäge (2) angetriebener Generator ist.

16. Hoch-Entaster nach einem der Ansprüche 1 bis 15, **dadurch gekennzeichnet, dass** die Astsäge (2) verschwenkbar und/oder höhenverstellbar am Stiel (3) gelagert ist.

17. Hoch-Entaster nach Anspruch 16, **dadurch gekennzeichnet, dass** die Schwenk- bzw. Höhenverstellung der Astsäge (2) vom unteren Ende des Stiels (3) aus fernbedienbar ist.

18. Hoch-Entaster nach einem der Ansprüche 1 bis 17, **dadurch gekennzeichnet, dass** der Stiel (3) zumindest eine auf die Astsäge (2) ausgerichtete Kamera (31) trägt, und dass ein von der Kamera (31) gespeister Monitor (32) vorgesehen ist.

19. Hoch-Entaster nach einem der Ansprüche 1 bis 18, **dadurch gekennzeichnet, dass** der bzw. die Antrieb(e) des zumindest einen Propellers (4) und der Astsäge (2) mittels einer am unteren Ende des Stiels (3) vom Benutzer betätigbaren Totmannschaltung (27) notabschaltbar ist/sind.

20. Hoch-Entaster nach einem der Ansprüche 1 bis 19, **dadurch gekennzeichnet, dass** der bzw. die Antrieb(e) des zumindest einen Propellers (4) und der Astsäge (2) mittels eines am Stiel (3) angebrachten Neigungssensor (35) notabschaltbar ist/sind, wobei der Neigungssensor (35) dafür ausgebildet ist, eine Notabschaltung zu veranlassen, wenn die Neigung des Stiels (3) gegenüber der Vertikalen einen vorgegebenen Schwellwert überschreitet.

## Claims

1. High-pruner, comprising a motor-driven branch saw on a pole, the lower end of the pole forming a handhold for the user, and at least one motor-driven propeller (4) mounted on the branch saw (2) or the pole (3).

2. High-pruner according to claim 1, **characterised in that** the at least one propeller (4) is mounted pivotably on the branch saw (2) or the pole (3).

3. High-pruner according to claim 1 or 2, **characterised in that** the propeller axis (16) of the at least one propeller (4) substantially coincides with the longitudinal axis of the pole (3).

4. High-pruner according to claim 3, **characterised in that** two counter-rotating motor-driven propellers (4) are provided whose propeller axes (16) coincide.

5. High-pruner according to claim 1 or 2, **characterised in that** the at least one motor-driven propeller (4) is mounted on the branch saw (2) or the pole (3) via an arm (6).

6. High-pruner according to any one of the claims 1 to 5, **characterised in that** at least two, preferably four to eight, motor-driven propellers (3) are provided in the form of a multicopter (5) which is equipped with a control (19) for adjusting and stabilising its flight attitude.

7. High-pruner according to any one of the claims 1 to 6, **characterised in that** the branch saw (2) has a sensor (23) for its saw power or contact force and that the at least one motor-driven propeller (4) is controlled by the measurement value of the sensor (23).

8. High-pruner according to claims 6 and 7, **characterised in that** the sensor (23) of the branch saw (2) is connected to the control (19) of the multicopter (5) and the control (19) is configured to adjust the attitude of the multicopter (5) with respect to a stabilisation of the saw power or saw force of the branch saw (2).

9. High-pruner according to any one of the claims 1 to 8 each in combination with claim 5, **characterised in that** the arm (6) is mounted pivotably on the branch saw (2) or the pole (3) via a first joint (11), wherein the first joint (11) preferably additionally allows for pivoting of the arm (6) about its longitudinal axis (13).

10. High-pruner according to claim 9, **characterised in that** the at least one propeller (4) is mounted on the arm (6) with the propeller axis (16) being pivotable with respect to the arm (6) via a second joint (14), wherein the second joint (14) preferably additionally allows for pivoting of the propeller axis (16) about the longitudinal axis (13) of the arm (6).

11. High-pruner according to claim 9 or 10, **characterised in that** the arm (6) comprises a pivot joint (17) which allows a pivoting of its one end with respect to its other end.

12. High-pruner according to any one of the claims 1 to 11, **characterised in that** the driving motor (9) of the branch saw (2) is mounted on the lower end of the pole (3) and drives the branch saw (2) via a first shaft running in the pole (3).

13. High-pruner according to any one of the claims 1 to 12, **characterised in that** the at least one propeller (4) is driven by the motor-driven branch saw (2) via a second shaft.

14. High-pruner according to any one of the claims 1 to 12, **characterised in that** the at least one propeller (4) is driven by at least one electric motor (18), which is fed via a power line by a power supply of the branch saw (2).

15. High-pruner according to claim 14, **characterised in that** the power supply is a battery, which is mounted on the lower end of the pole (3), or a generator driven by the driving motor (9) of the branch saw (2).

16. High-pruner according to any one of the claims 1 to 15, **characterised in that** the branch saw (2) is mounted pivotably and/or height-adjustably on the pole (3).

17. High-pruner according to claim 16, **characterised in that** the respective pivot or height adjustment of the branch saw (2) is remotely controllable from the lower end of the pole (3) .

18. High-pruner according to any one of the claims 1 to 17, **characterised in that** the pole (3) carries at least one camera (31) oriented towards the branch saw (2) and that a monitor (32) fed by the camera (31) is provided.

19. High-pruner according to any one of the claims 1 to 18, **characterised in that** the drive/s of the at least one propeller (4) and the branch saw (2) can be turned off in emergency by means of a deadman's switch (27) controllable on the lower end of the pole (3) by the user.

20. High-pruner according to any one of the claims 1 to 19, **characterised in that** the drive/s of the at least one propeller (4) and of the branch saw (2) can be turned off in emergency by means of an inclination sensor (35) mounted on the pole (3), wherein the inclination sensor (35) is configured to execute an emergency turning-off, when the inclination of the pole (3) with respect to the vertical exceeds a predetermined threshold.

## Revendications

1. Elagueur sur perche, comprenant un coupe-branches automoteur sur une perche, l'extrémité inférieure de la perche (3) formant une poignée pour l'utilisateur, et au moins une hélice (4), laquelle est montée sur le coupe-branches (2) ou sur la perche (3).

2. Elagueur sur perche selon la revendication 1, **caractérisé en ce que** l'au moins une hélice (4) est montée en pouvant pivoter sur le coupe-branches (2) ou sur la perche (3).

3. Elagueur sur perche selon la revendication 1 ou 2, **caractérisé en ce que** l'axe d'hélice (16) de l'au moins une hélice (4) et l'axe longitudinal de la perche (3) sensiblement coïncident.

4. Elagueur sur perche selon la revendication 3, **caractérisé en ce que** deux hélices (4) automotrices dans des sens opposés sont prévues, dont les axes d'hélices (16) coïncident.

5. Elagueur sur perche selon la revendication 1 ou 2, **caractérisé en ce que** l'au moins une hélice (4) automotrice est montée sur le coupe-branches (2) ou sur la perche (3) par le biais d'un bras (6).

6. Elagueur sur perche selon l'une des revendications 1 à 5, **caractérisé en ce qu'**au moins deux, de préférence quatre à huit, hélices (3) automotrice sont prévues sous la forme d'un multicoptère (5), lequel est équipé d'une commande (19) pour le réglage et la stabilisation de son attitude de vol.

7. Elagueur sur perche selon l'une des revendications 1 à 6, **caractérisé en ce que** le coupe-branches (2) présente un senseur (23) pour sa puissance de sciage ou force de pression et l'au moins une hélice (4) automotrice est commandée par la valeur mesurée du senseur (23).

8. Elagueur sur perche selon les revendications 6 et 7, **caractérisé en ce que** le senseur (23) du coupe-branches (2) est raccordé à la commande (19) du multicoptère (5) et celle-ci est conçue pour régler l'attitude de vol du multicoptère (5) en ce qui concerne un maintien constant de la puissance ou force de sciage du coupe-branches (2).

9. Elagueur sur perche selon l'une des revendications 1 à 8, respectivement en combinaison avec la revendication 5, **caractérisé en ce que** le bras (6) est logé en pouvant pivoter sur le coupe-branches (2) ou sur la perche (3) par le biais d'une première articulation (11), où, de préférence, la première articulation (11) permet en supplément une rotation du bras (6) autour de son axe longitudinal (13).

10. Elagueur sur perche selon la revendication 9, **caractérisé en ce que** l'au moins une hélice (4) est logée sur le bras (6) par le biais d'une seconde articulation (14) avec l'axe d'hélice (16) pouvant pivoter par rapport au bras (6), où la seconde articulation (14) permet en supplément un pivotement de l'axe d'hélice (16) autour de l'axe longitudinal (13) du bras (6).

11. Elagueur sur perche selon la revendication 9 ou 10, **caractérisé en ce que** le bras (6) contient un pivot (17), lequel permet une rotation d'une de ses extrémités par rapport à l'autre extrémité.

12. Elagueur sur perche selon l'une des revendications 1 à 11, **caractérisé en ce que** le moteur d'entrainement (9) du coupe-branches (2) est monté sur l'extrémité inférieure de la perche (3) et entraine le coupe-branches (2) par le biais d'un premier arbre s'étendant dans la perche (3).

13. Elagueur sur perche selon l'une des revendications 1 à 12, **caractérisé en ce que** l'au moins une hélice (4) est entrainée par le coupe-branches (2) automoteur par le biais d'un second arbre.

14. Elagueur sur perche selon l'une des revendications 1 à 12, **caractérisé en ce que** l'au moins une hélice (4) est entraînée par au moins un moteur électrique (18), lequel est alimenté par une alimentation en énergie du coupe-branches (2) par le biais d'une ligne de courant.

15. Elagueur sur perche selon la revendication 14, **caractérisé en ce que** l'alimentation en énergie est une batterie qui est montée sur l'extrémité inférieure de la perche (3), ou est un générateur entrainé par le moteur d'entrainement (9) du coupe-branches (2).

16. Elagueur sur perche selon l'une des revendications 1 à 15, **caractérisé en ce que** le coupe-branches (2) est logé sur la perche (3) en pouvant pivoter et/ou en étant réglable en hauteur.

17. Elagueur sur perche selon la revendication 16, **caractérisé en ce que** le réglage du pivotement, respectivement le réglage de la hauteur, du coupe-branches (2) peut être actionné à distance à partir de l'extrémité inférieure de la perche (3).

18. Elagueur sur perche selon l'une des revendications 1 à 17, **caractérisé en ce que** la perche (3) porte au moins une caméra (31) orientée vers le coupe-branches (2) et qu'un moniteur (32) alimenté par la caméra (31) est prévu.

19. Elagueur sur perche selon l'une des revendications 1 à 18, **caractérisé en ce que** le moteur, respectivement les moteurs, de l'au moins une hélice (4) et du coupe-branches (2) peut/peuvent être arrêtés en urgence au moyen d'un dispositif d'homme mort (27) pouvant être actionné par l'utilisateur.

20. Elagueur sur perche selon l'une des revendications 1 à 19, **caractérisé en ce que** le moteur, respectivement les moteurs, de l'au moins une hélice (4) et du coupe-branches (2) peut/peuvent être arrêtés en urgence au moyen d'un capteur d'inclinaison (35) rapporté sur la perche (3), où le capteur d'inclinaison (35) est conçu pour activer un arrêt d'urgence lorsque l'inclinaison de la perche (3) par rapport à la verticale dépasse une valeur de seuil prédéfinie.
